# EUROPÄISCHE PATENTSCHRIFT

(11) **EP 2 256 449 B1**
(45) Veröffentlichungstag und Bekanntmachung des Hinweises auf die Patenterteilung: **20.06.2012**
(21) Anmeldenummer: 10163058.0
(22) Anmeldetag: 18.05.2010
(51) Int. Cl.: F28D 1/03, F28F 9/02, F28F 9/26

(54) **Verfahren zur Herstellung einer Heizplatte, Plattenheizkörper und Abstandhalter**
Method for producing a radiator plate, plate radiator body and distancer
Procédé de fabrication d'une plaque chauffante, radiateur à plaques et écarteur

(30) Priorität: 18.05.2009 DE 102009003182
(43) Veröffentlichungstag der Anmeldung: 01.12.2010
(73) Patentinhaber: Caradon Stelrad B.V., 2200 Herentals (BE)
(72) Erfinder: Berthet, Sylvain, 3190 Boortmeerbeek (BE); Grauls, Roger, 3971 Heppen (BE)
(74) Vertreter: Bauer, Dirk

(56) Entgegenhaltungen:
- AT-B- 411 493
- DE-A1- 2 429 321
- DE-A1- 3 440 272
- DE-A1- 4 407 080
- DE-U- 7 247 319
- US-A- 5 184 673

## Beschreibung

Die Erfindung betrifft zunächst ein Verfahren zur Herstellung einer Heizplatte eines Plattenheizkörpers, wobei zwei Halbschalen, von denen mindestens eine profiliert ist, derart zu einer Heizplatte verbunden werden, dass zwischen den Halbschalen zwei parallel verlaufende Sammelkanäle und zwischen den Sammelkanälen Heizkanäle für ein Heizmittel ausgebildet werden, wobei im Bereich einer eine Halbschale durchdringenden Heizmittelanschlussöffnung in einem Sammelkanal ein Abstandhalter derart fixiert wird, dass gegenüberliegende Stützflächen eines Stützbereichs des Abstandhalters mit gegenüberliegenden Innenflächen der beiden Halbschalen in Kontakt kommen und ein Freibereich des Abstandhalters, der zumindest teilweise von dem Stützbereich umgeben wird, mit der Heizmittelanschlussöffnung korrespondiert.

Weiterhin betrifft die Erfindung einen Plattenheizkörper mit mindestens einer aus zwei Halbschalen, von denen mindestens eine profiliert ist, zusammengefügten Heizplatte, wobei zwischen den Halbschalen zwei parallel verlaufende Sammelkanäle und zwischen den Sammelkanälen Heizkanäle für ein Heizmittel ausgebildet sind, und mit mindestens einer, an einem der Sammelkanäle ausgebildeten Heizmittelanschlussöffnung der Heizplatte, und einem Abstandhalter, der im Bereich einer eine Halbschale durchdringenden Heizmittelanschlussöffnung in dem Sammelkanal derart fixiert ist, dass gegenüberliegende Stützflächen eines Stützbereichs des Abstandhalters mit gegenüberliegenden Innenflächen der beiden Halbschalen in Kontakt stehen und dass ein Freibereich des Abstandhalters, der zumindest teilweise von dem Stützbereich umgeben ist, mit der Heizmittelanschlussöffnung korrespondiert.

Schließlich betrifft die Erfindung ein Abstandhalter-Set für eine aus zwei Halbschalen, von denen mindestens eine profiliert ist, zusammengesetzte Heizplatte eines Plattenheizkörpers, wobei zwischen den Halbschalen zwei parallel verlaufende Sammelkanäle und zwischen den Sammelkanälen Heizkanäle für ein Heizmittel ausgebildet sind, und wobei der Abstandhalter im Bereich der Heizmittelanschlussöffnung derart in dem Sammelkanal fixierbar ist, dass gegenüberliegende Stützflächen des Abstandhalters mit gegenüberliegenden Innenflächen der beiden Halbschalen in Kontakt stehen und ein Freibereich des Abstandhalters, der zumindest teilweise von dem Stützbereich umgeben ist, mit der Heizmittelanschlussöffnung korrespondiert.

### Stand der Technik

Ein Verfahren der vorstehend genannten Art, ein mit einem solchen Verfahren hergestellter Plattenheizkörper und ein Abstandhalter-Set für einen solchen Plattenheizkörper sind beispielsweise aus der AT 411 493 B allgemein bekannt. Die Halbschalen des bekannten Plattenheizkörper werden aus Stahlblech tiefgezogen und im Wesentlichen unter Tolerierung der hierbei entstehenden Abweichungen von der Idealform zusammengefügt und verschweißt.

Der ringförmige Abstandhalter wird innerhalb der Heizplatte in einen Durchlassquerschnitt von einem der Sammelkanäle zu mindestens einem der Heizkanäle eingefügt und verschließt diesen weitgehend, wobei zwischen dem äußeren Umfang des Abstandhalters und den Innenseiten der Halbschalen zwei in etwa dreiecksförmige Abschnitte des Durchlassquerschnitts offen bleiben. An Plattenheizkörpern, in denen - wie in der AT 411 493 B vorgeschlagen - die Abstandhalter das Heizmittel gezielt in eine Ausströmrichtung lenken, fließen Leckageströme des Heizmittels durch diese Abschnitte und vermindern den Wirkungsgrad des bekannten Plattenheizkörpers.

Im Umfeld der Erfindung offenbart DE 724 73 19 U einen geschmiedeten Abstandhalter, dessen äußere Kontur im Wesentlichen dem Durchlassquerschnitt entspricht, um ein Verdrehen bei der Montage zu vermeiden.

### Aufgabe

Der Erfindung liegt die Aufgabe zugrunde, einen leckagefreien Heizmittelfluss zu ermöglichen, insbesondere eine gerichtete Strömung des Heizmittels durch bestimmte Heizkanäle oder Gruppen von Heizkanälen bzw. Sammelkanalabschnitte zu erlauben.

### Lösung

Ausgehend von dem Verfahren der eingangs beschriebenen Art, wird die vorgenannte Aufgabe dadurch gelöst, dass mindestens ein Abstandhalter unter Verwendung eines

Dichtmittels so in einem Sammelkanal fixiert wird, dass der Abstandhalter und das Dichtmittel gemeinsam den Sammelkanal fluiddicht versperren, wodurch eine Strömung des Heizmittels in Längsrichtung des Sammelkanals dort unterbunden wird.

Die Erfindung unterscheidet sich somit dahingehend grundlegend vom vorgenannten Stand der Technik, dass von rein aus Stahlmaterial bestehenden Abstandhaltern abgerückt wird, zugunsten der zusätzlichen Verwendung eines Dichtmittels, um den Kanalquerschnitt nach Montage des Abstandhalters zusammen mit dem Dichtmittel zuverlässig zu verschließen. Die Schwierigkeit, eine hinreichend dichte Sperre in dem Sammelkanal allein mittels eines aus Stahl gefertigten Abstandhalters zu erreichen, liegt in den vergleichsweise großen Toleranzen im Bereich der Sammelkanalquerschnitte begründet, die wiederum aus den vergleichsweise großen Toleranzen bei der umformtechnischen Herstellung der beiden zusammenzufügenden Halbschalen resultiert. Während im Stützbereich die beiden Halbschalen im Wege des Anschweißens einer Verteilergarnitur (auch genannt "Anschlussteil") durch den beim Widerstandsschweißen aufgebrachten Pressdruck noch so aneinander geformt, insbesondere gebogen werden, dass eventuelle Spalten in ausreichendem Maß auch ohne Dichtmittel verschlossen werden, ist ein solcher Schließvorgang von Spalten im Bereich von Randabschnitten des Sammelkanal-Querschnitts, in denen häufig jeweils eine Dreieckform vorliegt, nicht möglich. Beim Verfahren nach dem Stand der Technik verbleiben daher, insbesondere in diesen an gegenüberliegenden Enden des Querschnitts liegenden, dreieckförmigen Zwickel-Querschnitten typischerweise freie Querschnitte, die unzulässig hohe Leckageströme verursachen und daher die mit Hilfe der Abstandhalter eigentlich bezweckte Strömungscharakteristik in einer Heizplatte empfindlich stören können. Hieraus resultieren im Stand der Technik erhebliche Leistungsverluste des Heizkörpers durch ungleichmäßige Erwärmung, da das Heizmittel an den Abstandhaltern vorbei einen Kurzschlussweg wählt.

Grundsätzlich kann das Dichtmittel beim Herstellungsprozess der Heizplatte in die Sammelkanäle der Heizplatten (vor deren Zusammenfügen) eingebracht werden, woraufhin anschließend der Abstandhalter platziert wird oder aber das Dichtmittel wird vor dessen Einfügen in den Sammelkanal auf den Abstandhalter appliziert, so dass beide als Bauteil aus zwei kombinierten Werkstoffen gemeinsam gehandhabt und fixiert werden. Es ist aber auch möglich, ein solches werkstoffmäßiges Kombinationsbauteil in einem separaten Schritt vorzufabrizieren und sodann - wie die bisherigen rein aus Stahl bestehenden Abstandhalter auch - in dem Sammelkanal platzieren und beim Verbinden der Halbschalen zu fixieren.

Bei dem Dichtmittel kann es sich um einen Festkörper mit elastischen und/oder plastischen Materialeigenschaften handeln, aber auch um ein zähflüssiges, insbesondere pastöses Fluid, das durch eine zeitgesteuerte, temperaturgesteuerte oder strahlungsgesteuerte chemische und/oder physikalische Reaktion nach der Montage einen Zustand annimmt, in dem es Querschnittsbereiche, insbesondere Spaltbereiche zwischen dem Stützbereich des Abstandhalters und den inneren Wandungen des Sammelkanals, zuverlässig verschließt. Dabei muss das Dichtmittel in seinem "Endzustand" beständig gegen einen dauerhaften Angriff des Heizmittels sowie gegenüber erhöhten Temperaturen von ca. 80°C bis 100°C sein.

Besonders vorteilhaft ist es, wenn das Dichtmittel ein Polymerdichtmittel ist. Überraschenderweise wird bei dem Vorgang des Anschweißens einer Verteilergarnitur im Bereich der Heizmittelanschlussöffnung sowie auch beim Verschweißen der zusammengefügten Halbschalen mittels Widerstandsschweißens aufgrund der kurzen Zeitspanne der Erhitzung nur wenig Wärme bis an die inneren Wandungen der Halbschalen im Bereich des Abstandhalters, d. h. insbesondere diesen außenumgebenden Dichtmittels, geleitet. Der Vorteil der polymeren Werkstoffe ("Kunststoffe") besteht in ihrer sehr leichten Formbarkeit und kosteneffizienten Herstellbarkeit, beispielsweise im Wege eines Spritzgieß- oder Extrusionsvorgangs.

Die erfindungsgemäße sehr gute Abdichtung im Bereich des in einem Sammelkanal eingesetzten Abstandhalters, ist insbesondere bei sogenannten seriellen Heizkörpern wichtig, bei denen die vordere Heizplatte zuerst und die hintere Heizplatte erst anschließend durchströmt werden soll, wozu gerichtete Strömungen zumindest innerhalb der vorderen Heizplatte nötig sind, um dort eine gleichmäßige Erwärmung zu erreichen.

Der Abstandhalter kann auch so eingesetzt werden, dass er zusammen mit dem Polymerdichtmittel einen Durchlassquerschnitt zwischen einem Sammelkanal und einem davon ausgehenden bzw. darin einbindenden Heizkanal abgedichtet verschließt. Das erfindungsgemäße Verfahren erlaubt es somit, einzelne Heizkanäle fluidtechnisch von dem zugeordneten Sammelkanal zu entkoppeln, um somit zum Beispiel einen einzelnen Heizkanal als "Steigkanal" für das Wärmeträgermedium zu verwenden, hingegen die übrigen Heizkanäle als "Sinkkanäle". Das Polymerdichtmittel verschließt dabei Spaltbereiche zwischen dem Stützbereich des Abstandhalters und den Halbschalen, d. h. den durch diese definierten Wandungen (Innenflächen) des Sammelkanals. Die Anpassungsfähigkeit des für die Dichtung verwendeten Polymer-Materials, das entweder plastisch oder elastisch sein kann oder eine Kombination der beiden vorgenannten Eigenschaften aufweisen kann, erlaubt es die Fertigungstoleranzen in Bezug auf den Querschnitt des Sammelkanals nicht unnötig stark zu beschränken, was insbesondere bei der Massenproduktion von Heizkörpern kaum wirtschaftlich darstellbar wäre.

Gemäß einer Weiterbildung der Erfindung ist vorgesehen, dass ein mit dem Polymerdichtmittel versehener Abstandhalter vor dem Verbinden der Halbschalen zumindest bereichsweise ein Übermaß in Bezug auf den Querschnitt des Sammelkanals besitzt und dass die Abdichtung durch das Verbinden der Halbschalen erfolgt, wobei das elastische oder plastische Polymerdichtmittel komprimiert oder ein viskoses eventuell seine Härte bzw. Zähigkeit vergrößerndes Polymerdichtmittel teilweise verdrängt wird.

Ein Polymerdichtmittel mit leichtem Übermaß gegenüber den zwischen Abstandhalter und Halbschalen noch verbleibenden offenen Abschnitten des Sammelkanals oder des Durchlassquerschnitts, das beim Zusammenfügen der Halbschalen gequetscht wird, schließt diese Abschnitte fluidtechnisch vollständig und vermeidet jeden Leckstrom des Heizmittels durch diese Abschnitte.

Im Rahmen eines erfindungsgemäßen Verfahrens wird bevorzugt das Polymerdichtmittel mit dem Stützbereich zwischen die Halbschalen eingefügt und steht dort eventuell auch ohne Dichtmittel flächig dichtend in metallischem Kontakt. Auf diese Weise kann ein Abstandhalter-Set als bauliche Einheit aus Stützbereich des Abstandhalter und Polymerdichtmittel vorgefertigt werden, um die Montage der Halbschalen zu vereinfachen und preisgünstiger zu gestalten. Alternativ kann zunächst ein Polymerdichtmittel an der Heizmittelanschlussöffnung auf die Halbschalen aufgebracht und anschließend der Stützbereich des Abstandhalters zwischen die Halbschalen gefügt werden.

Ausgehend von den bekannten Plattenheizkörpern wird nach der Erfindung vorgeschlagen, dass mindestens ein Abstandhalter zusammen mit einem Dichtmittel so in einem Sammelkanal fixiert ist, dass der Abstandhalter und das Dichtmittel gemeinsam den Sammelkanal fluiddicht versperren, wodurch eine Strömung des Heizmittels in Längsrichtung des Sammelkanals dort unterbunden ist.

Ausgehend von dem bekannten Abstandhalter-Set wird nach der Erfindung vorgeschlagen, ein vorgeformtes Polymerdichtmittel vorzusehen, das nach dem Verbinden der Halbschalen den Sammelkanal zusammen mit dem Stützbereich des Abstandhalters fluiddicht verschließt. Ein solches erfindungsgemäßes montagefertiges Abstandhalter-Set ermöglicht die Ausführung eines erfindungsgemäßen Verfahrens und die Herstellung eines erfindungsgemäßen Plattenheizkörpers und zeichnet sich durch die oben genannten Vorteile aus. Alternativ kann ein pastöses, im Laufe des Herstellungsprozesses vorzugsweise sich verfestigendes Polymerdichtmittel zum Einsatz kommen.

An einem erfindungsgemäßen Abstandhalter-Set umschließt vorzugsweise das Polymerdichtmittel den Stützbereich des Abstandhalters an einem äußeren Umfang oder ist dort an den Stützbereich angeschlossen. Das Polymerdichtmittel besteht so aus einem einzelnen Bauteil oder mehreren Bauteilen und lässt sich daher besonders einfach auf oder an dem Stützbereich montieren, beispielsweise durch Klemmung oder Verklebung.

Alternativ weist das Polymerdichtmittel eine Mehrzahl von Dichtelementen auf und jedes der Dichtelemente verschließt jeweils einen von mehreren getrennten Abschnitten des Durchlassquerschnitts. Die Aufteilung des Polymerdichtmittels in mehrere Dichtelemente verringert den Materialaufwand für die Herstellung des Polymerdichtmittels und trägt so zu einer Verringerung der Kosten bei.

Besonders bevorzugt besteht an einem erfindungsgemäßen Abstandhalter das Polymerdichtmittel aus einem (Silikon-)elastomer. Silikonelastomere sind hoch temperatur- und wasserbeständig und gewährleisten eine hohe Gebrauchsdauer eines hiermit ausgestatteten erfindungsgemäßen Plattenheizkörpers. Alternativ kann als Material des Polymerdichtmittels ein Thermoplast zum Einsatz kommen und - durch entsprechende Führung des Schweißstroms - das Polymerdichtmittel in der Kontaktfläche zum Abstandhalter und zu den Halbschalen leicht aufgeschmolzen werden, so dass es beim Abkühlen mit diesen Oberflächen verklebt und eine dauerhafte Verbindung eingeht.

An einem erfindungsgemäßen Abstandhalter-Set ist das Polymerdichtmittel vorteilhafter Weise mit dem Stützbereich des Abstandhalters formschlüssig verbunden ist. Das Polymerdichtmittel kann dann ohne zusätzliche Hilfsstoffe bei der Vormontage des Abstandhalter-Sets mit dem Stützbereich verbunden werden, z. B. mittels eines hinterschnittenen, widerhakenförmigen Fixierabschnitts. Alternativ kann das Polymerdichtmittel mit dem Stützbereich verklebt werden.

### Ausführungsbeispiele

Die Erfindung wird nachfolgend anhand von Ausführungsbeispielen erläutert. Es zeigen
- Fig. 1: eine Seitenansicht eines erfindungsgemäßen Plattenheizkörpers,
- Fig. 2: einen Schnitt einer ersten erfindungsgemäßen Heizplatte,
- Fig. 3a und b: zwei Details des Schnittes der erfindungsgemäßen Heizplatte,
- Fig. 4a bis d: vier Ansichten eines ersten erfindungsgemäßen Abstandhalters
- Fig. 5: eine Explosionsdarstellung des ersten Abstandhalters,
- Fig. 6a bis d: vier Ansichten eines zweiten erfindungsgemäßen Abstandhalters,
- Fig. 7: eine Explosionsdarstellung des zweiten Abstandhalters,
- Fig. 8a und b: zwei Schnitte des zweiten Abstandhalters und
- Fig. 9: ein Detail eines Schnitts einer zweiten erfindungsgemäßen Heizplatte.
- Fig. 10a: eine perspektivische Ansicht eines dritten erfindungsgemäßen Abstandhal- ters und
- Fig. 10b: einen Schnitt durch den dritten Abstandhalter.

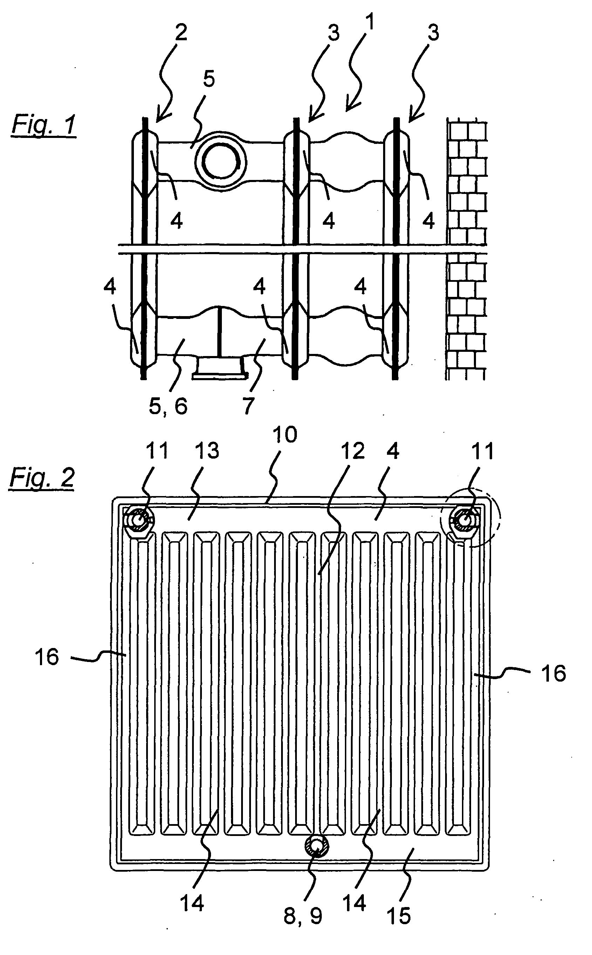

Der in Figur 1 gezeigte erfindungsgemäße Plattenheizkörper 1 weist drei Heizplatten 2, 3 auf. Die Heizplatten 2, 3 sind aus je zwei Halbschalen 4 aus durch Tiefziehen profiliertem Stahlblech und an Heizmittelanschlussöffnungen mit Heizmittelrohren 5 verschweißt. Das Heizmittel wird dem Plattenheizkörper 1 durch den Zulauf 6 (an einer unteren, mittigen Verteilergarnitur) zugeführt, durchläuft zunächst die Frontplatte 2 und danach die beiden rückwärtigen Heizplatten 3 und wird durch den Ablauf 7 (an der unteren Verteilergarnitur) aus dem Plattenheizkörper 1 abgeleitet. Die Heizmittelanschlussöffnungen und das Heizmittel sind nicht dargestellt.

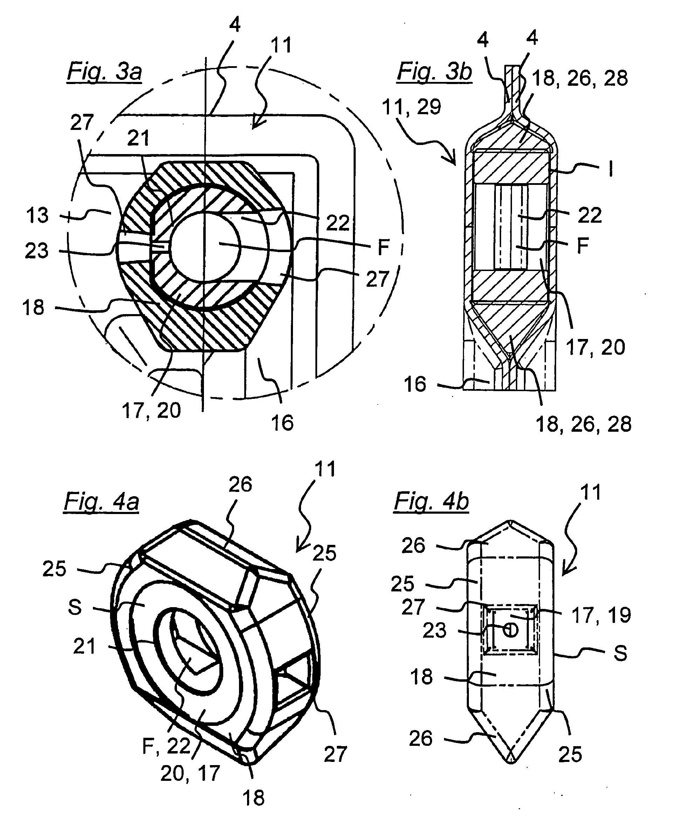

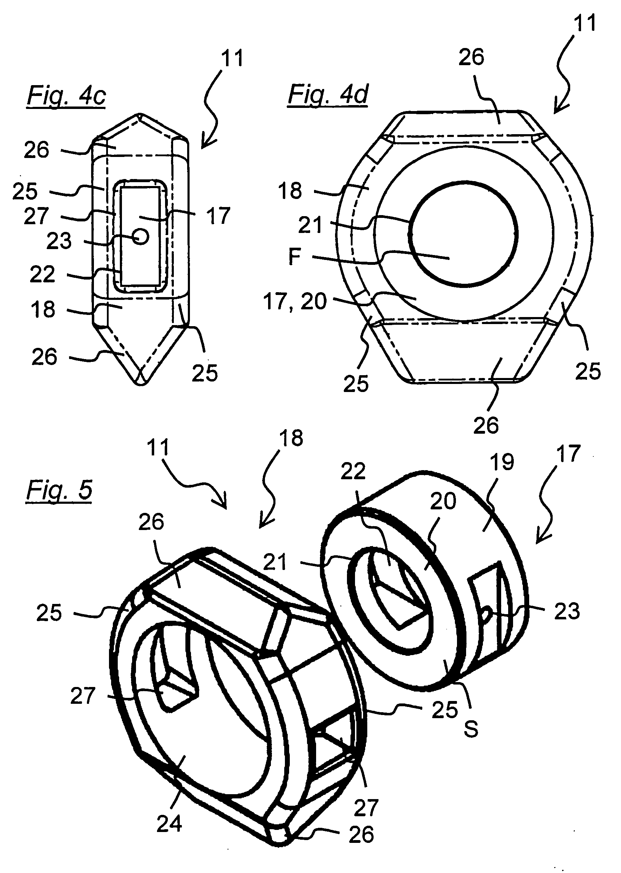

Die in Figur 2 im Schnitt dargestellte erfindungsgemäße Heizplatte 2 ist die Frontplatte des Plattenheizkörpers 1. Am Zulauf 6 weist die Heizplatte 2 einen nur aus einem metallischen, aus Stahl gefertigten Stützbereich 8 bestehenden Abstandhalter 9 auf, an der Oberseite 10 des Plattenheizkörpers 1 wird das Heizmittel durch zwei identische, symmetrisch angeordnete erfindungsgemäße Abstandhalter 11 abgeleitet, von denen einer in den Figuren 3a und 3b in zwei Detailschnitten durch die Heizplatte 2 und in den Figuren 4a bis 4d und 5 einzeln in verschiedenen Ansichten in dargestellt ist. Ausgehend von dem Abstandhalter 9 am Zulauf 6 strömt das Heizmittel im Wesentlichen zunächst aufwärts durch einen zentralen Heizkanal 12 in den oberen Sammelkanal 13, von diesem abwärts durch mehrere Heizkanäle 14 in den unteren Sammelkanal 15 und schließlich wieder aufwärts durch zwei periphere Heizkanäle 16 und durch Abstandhalter 11, die jeweils Teil eines erfindungsgemäßen Abstandhalter-Sets sind, in die rückwärtigen Heizplatten.

Das erfindungsgemäße Abstandhalter-Set weist einen aus einem Stahlrohrabschnitt umgeformten Stützbereich 17 auf und ein den Stützbereich 17 umschließendes, ringförmig spritzgegossenes Polymerdichtmittel 18 aus einem Silikonelastomer.

Der Stützbereich 17 weist einen zylinderförmigen Mantel 19, zwei kreisringförmige Stützschultern 20 und in diesen jeweils eine Bohrung 21 auf. Der Mantel 19 weist eine im Wesentlichen rechteckige Durchflussöffnung 22 für das Heizmittel und dieser gegenüber eine kleine Entlüftungsbohrung 23 auf.

Das Polymerdichtmittel 18 weist eine kreiszylindrische Innenfläche 24 mit einem leichten Untermaß gegenüber dem Mantel 19 des Stützbereichs 17 auf. Das Polymerdichtmittel 18 weist einen rechteckigen Querschnitt mit außen leicht gefassten Kanten 25 und zwei einander gegenüber liegenden, spitz zulaufenden Dichtelementen 26 auf. An dem Polymerdichtmittel 18 sind Durchbrüche 27 über der Durchflussöffnung 22 und über der Entlüftungsbohrung 23 des Stützbereichs 17 ausgebildet. In dem in den Figuren 3a und 3b dargestellten eingebauten Zustand verschließen die Dichtelemente 26 des Polymerdichtmittels 18 zwei Abschnitte 28 eines Durchlassquerschnitts 29 zwischen dem oberen Sammelkanal 13 und dem peripheren Heizkanal 16. Dies geschieht dadurch, dass der Abstandhalter 11 zusammen mit dem Dichtmittel 18 den Querschnitt des Sammelkanals 13 zwischen dem letzten und dem vorletzten Heizkanal 16 versperrt.

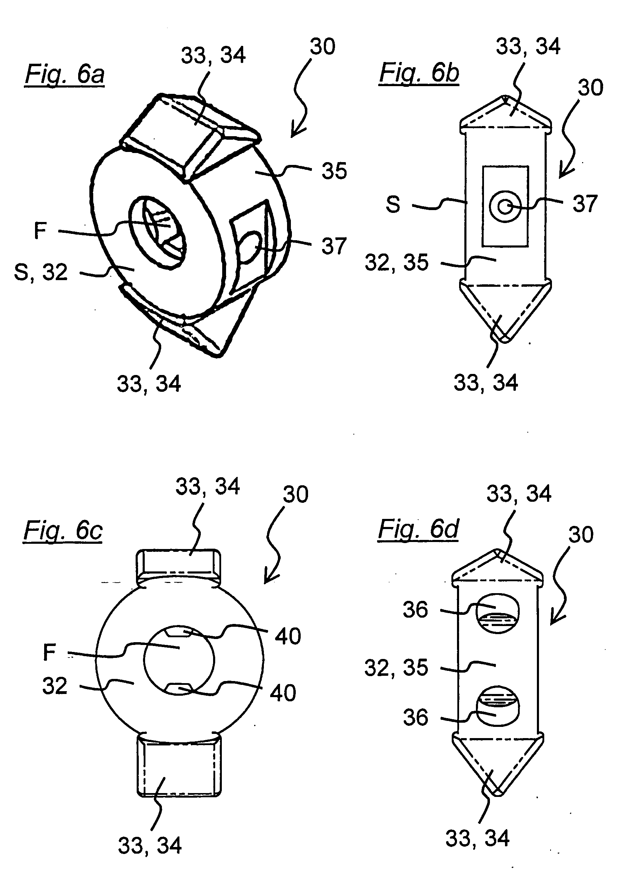

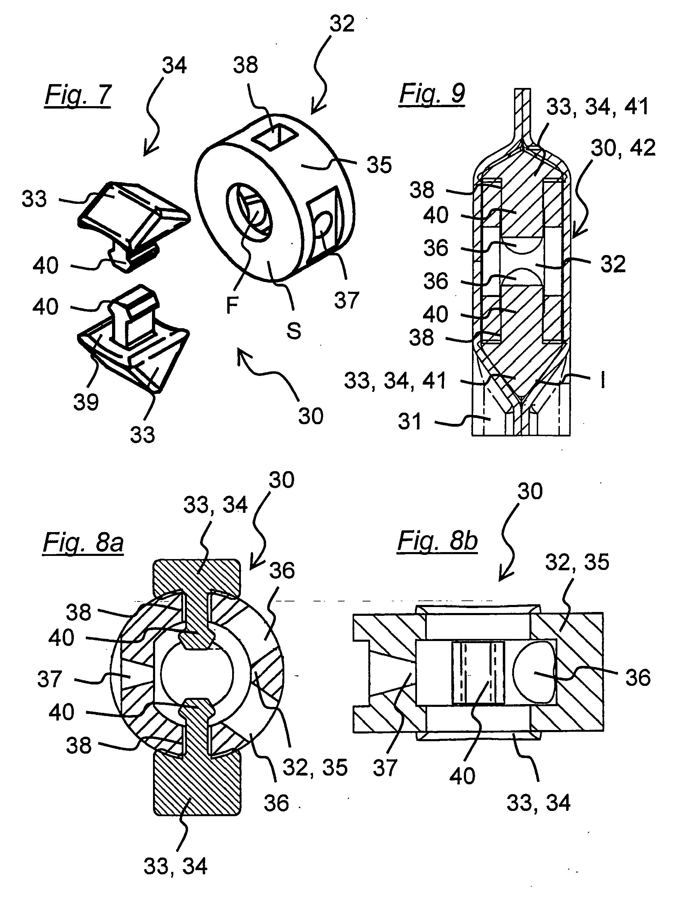

Anstelle des ersten Abstandhalters 11 kann der in den Figuren 6a bis 6d und 7 in verschiedenen Ansichten und in den Figuren 8a und 8b in zwei Schnitten dargestellte weitere erfindungsgemäße Abstandhalter 30 wie in Figur 9 im eingebauten Zustand dargestellt in einer erfindungsgemäßen Heizplatte 31 eines nicht weiter dargestellten erfindungsgemäßen Plattenheizkörpers zum Einsatz kommen.

Der zweite Abstandhalter 30, der Teil eines weiteren erfindungsgemäßen Abstandhalter-Sets ist, weist einen anderen, aus einem Stahlrohrabschnitt umgeformten Stützbereich 32 auf und ist mit einem in zwei getrennte, keilförmige Dichtelemente 33 spritzgegossenen Polymerdichtmittel 34 aus einem Silikonelastomer kombiniert.

Der Stützbereich 32 weist im Wesentlichen die Maße des Stützbereiches 17 des ersten Abstandhalter-Sets auf. Der Mantel 35 des Stützbereichs 32 weist zwei kreisförmige Durchflussöffnungen 36 für das Heizmittel und dieser gegenüber eine kleine Lüftungsbohrung 37 auf. Außerdem ist der Stützbereich 32 mit zwei gegenüber liegenden rechteckigen Rastöffnungen 38 mit einem angepassten Querschnitt für die Dichtelemente 33 versehen.

Die Dichtelemente 33 weisen jeweils eine leicht kreiszylindrisch gekrümmte Innenfläche 39 und einen Halteabschnitt in Form eines Rastnippels 40 zum Verbinden mit dem Stützbereich 32 auf. In dem in Figur 9 dargestellten eingebauten Zustand verschließen die Dichtelemente 33 des Polymerdichtmittels 34 wiederum zwei Abschnitte 41 eines Durchlassquerschnitts 42 zwischen dem oberen Sammelkanal und dem peripheren Heizkanal der erfindungsgemäßen Heizplatte 31.

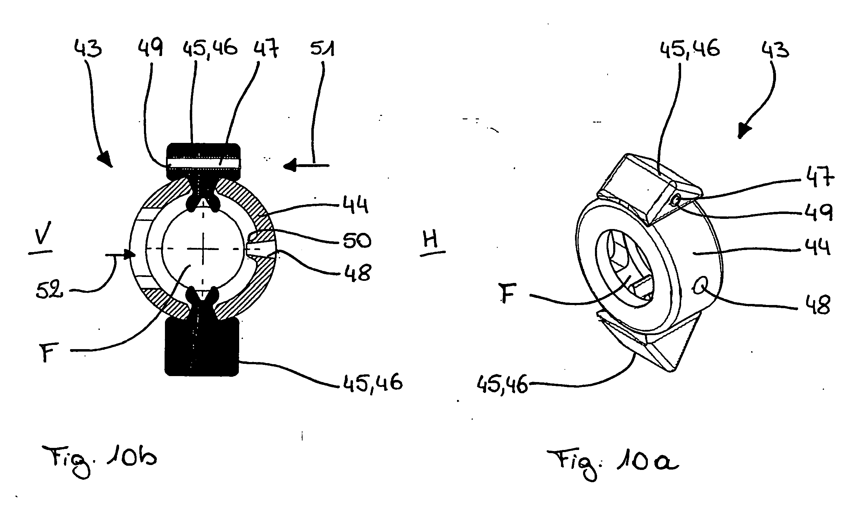

In den Figuren 10a und 10b ist schließlich noch eine dritte Ausführungsform eines Abstandhalter-Sets dargestellt, das einen Abstandhalter 43 umfasst. Wie auch bei dem Ausführungsbeispiel gemäß den Figuren 6a bis 6d und 7 sowie 8a und 8b besitzt dieses dritte Abstandhalter-Set einen metallischen Stützbereich 44 und zwei sich darin außen nach oben sowie nach unten anschließende Dichtelemente 45 aus einem Polymerdichtmittel 46. Bei der hier gezeigten alternativen Ausführungsform ist ein Entlüftungskanal 47 in dem Inneren des oberen Dichtelements 45 ausgebildet. Der Entlüftungskanal 47 verläuft tangential zu dem ringförmig gestalteten Stützbereich 44. Der Entlüftungskanal 47 stellt daher - im Gegensatz zu dem weiter unten beschriebenen zweiten Entlüftungskanal 48 - keine Verbindung zwischen der äußeren Umgebung des Abstandhalters 43 (insbesondere zwischen dem vorderen Bereich V oder dem hinteren Bereich H) und dem im Inneren des Stützbereichs 44 angeordneten Freiraum F des Abstandhalters 43 her. Vielmehr erfüllt der Entlüftungskanal 47 ausschließlich eine Bypass-Funktion, indem er den vorderen Bereich V und den hinteren Bereich H in dem oberen Sammelkanal miteinander verbindet. Um zu verhindern, dass der Entlüftungskanal 47 während der Herstellung des Heizkörpers beim Zusammenfügen und Verschweißen der beiden Halbschalen der Heizplatte unkontrollierbar verkleinert oder gänzlich verschlossen wird, wird die innere Mantelfläche des Entlüftungskanals 47 von einem aus Metall bestehenden Rohrstück 49 gebildet, das wie eine Art eingebettetes Stützelement wirkt.

Der zweite Entlüftungskanal 48 des Abstandhalters 43 besitzt eine kegelförmige Gestalt, wobei sich der Querschnitt von der äußeren Umgebung des Abstandhalters 43 auf den inneren Freiraum F hin verjüngt. Im Bereich des Entlüftungskanals 48 ist die Wandstärke des Stützbereichs 44 vergrößert, wobei der Entlüftungskanal 48 zum inneren Freiraum F hin von einem spitz zulaufenden Kragen 50 umgeben ist. Sowohl die Querschnittsgestalt des Entlüftungskanals 48 selbst als auch die des Kragens 50 verhindern während des normalen Heizbetriebs einen Durchtritt von Wasser aus dem inneren Freiraum F des Abstandhalters 43 in den hinteren Teil des oberen Sammelkanals.

Aus Figur 10b ist zu erkennen, dass die Durchströmung sowohl des in dem Polymerdichtmittel 46 befindlichen Entlüftungskanals 47 als auch des in dem metallischen Stützbereich 44 befindlichen Entlüftungskanals 48 jeweils in Richtung des Pfeils 51 erfolgt, wohingegen die Strömung der Luft aus dem vorderen Bereich V in den inneren Freiraum F des Abstandhalters 43 in Richtung des Pfeils 52, also in entgegen gesetzte Richtung erfolgt.

### Bezugszeichenliste

In den Figuren sind
- 1: Plattenheizkörper
- 2: Heizplatte
- 3: Heizplatte
- 4: Halbschale
- 5: Heizmittelrohr
- 6: Zulauf
- 7: Ablauf
- 8: Stützbereich
- 9: Abstandhalter
- 10: Oberseite
- 11: Abstandhalter
- 12: Heizkanal
- 13: Sammelkanal
- 14: Heizkanal
- 15: Sammelkanal
- 16: Heizkanal
- 17: Stützbereich
- 18: Polymerdichtmittel
- 19: Mantel
- 20: Stützschulter
- 21: Bohrung
- 22: Durchflussöffnung
- 23: Entlüftungsbohrung
- 24: Innenfläche
- 25: Kante
- 26: Dichtelement
- 27: Durchbruch
- 28: Abschnitt
- 29: Durchlassquerschnitt
- 30: Abstandhalter
- 31: Heizplatte
- 32: Stützbereich
- 33: Dichtelement
- 34: Polymerdichtmittel
- 35: Mantel
- 36: Durchflussöffnung
- 37: Entlüftungsbohrung
- 38: Rastöffnungen
- 39: Innenfläche
- 40: Rastnippel
- 41: Abschnitt
- 42: Durchlassquerschnitt
- 43: Abstandhalter
- 44: Stützbereich
- 45: Dichtelement
- 46: Polymerdichtmittel
- 47: Entlüftungskanal
- 48: Entlüftungskanal
- 49: Rohrstück
- 50: Kragen
- 51: Pfeil
- 52: Pfeil

- S: Stützfläche
- I: Innenfläche
- F: Freiraum

## Patentansprüche

1. Verfahren zur Herstellung einer Heizplatte (2, 31) eines Plattenheizkörpers (1), wobei zwei Halbschalen (4), von denen mindestens eine profiliert ist, derart zu der Heizplatte (2, 31) fluiddicht verbunden werden, dass zwischen den Halbschalen (4) zwei parallel zueinander verlaufende Sammelkanäle (13, 15) und zwischen den Sammelkanälen (13, 15) Heizkanäle (12,14,16) für ein Heizmittel ausgebildet werden, wobei im Bereich einer eine Halbschale (4) durchdringenden Heizmittelanschlussöffnung ein Abstandhalter (11, 30) in einem Sammelkanal (13, 15) derart fixiert wird, dass gegenüberliegende Stützflächen (S) eines Stützbereichs (8, 17, 32) des Abstandhalters (11, 30) mit gegenüberliegenden an die Heizmittelanschlussöffnung angrenzenden Innenflächen (I) der beiden Halbschalen (4) in Kontakt kommen und ein Freibereich (F) des Abstandhalters (11, 30), der zumindest teilweise von dem Stützbereich (8, 17, 32) umgeben wird, mit der Heizmittelanschlussöffnung korrespondiert, ***dadurch gekennzeichnet, dass*** mindestens ein Abstandhalter (11, 30) unter Verwendung eines Dichtmittels (18, 34) so in einem Sammelkanal (13, 15) fixiert wird, dass der Abstandhalter (11, 30) und das Dichtmittel (18, 34) gemeinsam den Sammelkanal (13, 15) fluiddicht versperren, wodurch eine Strömung des Heizmittels in Längsrichtung des Sammelkanals (13, 15) dort unterbunden wird.

2. Verfahren nach Anspruch 1, ***dadurch gekennzeichnet, dass*** das Dichtmittel (18, 34) ein Polymerdichtmittel ist.

3. Verfahren nach Anspruch 2, ***dadurch gekennzeichnet, dass*** ein mit dem Polymerdichtmittel (18, 34) versehener Abstandhalter (11,30) vor dem Verbinden der Halbschalen (4) miteinander zumindest bereichsweise ein Übermaß in Bezug auf einen Querschnitt des Sammelkanals (13, 15) besitzt und dass die Abdichtung durch das Verbinden der Halbschalen (4) erfolgt, wobei das elastische oder plastische Polymerdichtmittel (18, 34) komprimiert und/oder ein viskoses, eventuell aushärtbares Polymerdichtmittel teilweise verdrängt wird.

4. Verfahren nach Anspruch 1, ***dadurch gekennzeichnet, dass*** das Dichtmittel zumindest außenseitig angeschmolzen wird und sich **dadurch** in Spaltbereichen zwischen dem Abstandhalter und den Innenflächen der Halbschalen anpasst und vorzugsweise eine Verbindung mit dem Stützbereich des Abstandhalters und/oder mit mindestens einer der Innenflächen der Halbschalen eingeht.

5. Verfahren nach Anspruch 4, ***dadurch gekennzeichnet, dass*** ein metallisches Lot als Dichtmittel verwendet wird und außenseitig zumindest auf Teilbereiche der Stützflächen aufgebraucht und beim Verbinden der Halbschalen und/oder beim Verbinden eines Heizmittelrohres mit einer der Heizplatten angeschmolzen wird, wobei das Heizmittelrohr so mit einer Halbschale verbunden wird, dass die Heizmittelanschlussöffnung mit einem inneren Querschnitt des Heizmittelrohres korrespondiert.

6. Plattenheizkörper (1) mit mindestens einer aus zwei Halbschalen (4), von denen mindestens eine profiliert ist, verbundenen Heizplatte (2, 31), wobei zwischen den Halbschalen (4) zwei parallel verlaufende Sammelkanäle (13, 15) Heizkanäle (12, 14, 16) für ein Heizmittel ausgebildet sind und mit mindestens einer an einem der Sammelkanäle (13, 15) ausgebildeten Heizmittelanschlussöffnung der Heizplatte (2, 31) sowie mit einem Abstandhalter (11, 30) der im Bereich einer Halbschale (4) durchdringenden Heizmittelanschlussöffnung in einem Sammelkanal derart fixiert ist, dass gegenüberliegende Stützflächen (S) eines Stützbereichs (17, 32) des Abstandhalters (11, 30) mit gegenüberliegenden Innenflächen (I) der beiden Halbschalen (4) in Kontakt stehen und ein freier Bereich (F) des Abstandhalters (11, 30), der zumindest teilweise von dem Stützbereich (17, 32) umgeben ist, mit der Heizmittelanschlussöffnung korrespondiert, ***dadurch gekennzeichnet, dass*** mindestens ein Abstandhalter (11, 30) zusammen mit einem Dichtmittel (18, 34) so in einem Sammelkanal (13, 15) fixiert ist, dass der Abstandhalter (11, 30) und das Dichtmittel (18, 34) gemeinsam den Sammelkanal (13, 15) fluiddicht versperren, wodurch eine Strömung des Heizmittels in Längsrichtung des Sammelkanals (13, 15) dort unterbunden ist.

7. Plattenheizkörper nach Anspruch 6, ***dadurch gekennzeichnet, dass*** das Dichtmittel (18, 34) ein Polymerdichtmittel ist und im fixierten Zustand im Vergleich mit einem vor dem Verbinden der Halbschalen (4) vorliegenden Ausgangszustand zwischen den Halbschalen (4) komprimiert ist, um mittels Anpressdruck an den Innenflächen (I) der Halbschalen (4) eine Abdichtung herbei zuführen.

8. Abstandhalter-Set, aufweisend einen Abstandhalter (11, 30), für eine aus zwei Halbschalen (4), von denen mindestens eine profiliert ist, zusammengesetzte Heizplatte (2, 31) eines Plattenheizkörpers (1), wobei zwischen den Halbschalen (4) zwei parallel verlaufende Sammelkanäle (13, 15) und zwischen den Sammelkanälen (13, 15) Heizkanäle (12, 14, 16) für ein Heizmittel ausgebildet sind, und wobei der Abstandhalter (11, 30) im Bereich einer Heizmittelanschlussöffnung derart in dem Sammelkanal (13, 15) fixierbar ist, dass gegenüberliegende Stützflächen (S) des Abstandhalters (11, 30) mit gegenüberliegenden Innenflächen (I) der beiden Halbschalen (4) in Kontakt stehen und ein Freibereich (F) des Abstandhalters (11, 30), der zumindest teilweise von einem Stützbereich (17, 32) umgeben ist, mit der Heizmittelanschlussöffnung korrespondiert, ***gekennzeichnet durch*** ein vorgeformtes Polymerdichtmittel (18, 34), das nach dem Verbinden der Halbschalen (4) den Sammelkanal (13, 15) zusammen mit dem Stützbereich (17, 32) fluiddicht verschließt.

9. Abstandhalter-Set nach dem vorgenannten Anspruch, ***dadurch gekennzeichnet, dass*** das Polymerdichtmittel (18, 34) im Wesentlichen ringförmig ist und den Stützbereich (17, 32) an einem äußeren Umfang umschließt.

10. Abstandhalter-Set nach Anspruch 8, ***dadurch gekennzeichnet, dass*** das Polymerdichtmittel (18, 34) eine Mehrzahl von Dichtelementen (26, 33) aufweist und jedes der Dichtelemente (26, 33) jeweils einen von mehreren getrennten Abschnitten (28, 41) des Querschnitts des Sammelkanals (29, 42) verschließt.

11. Abstandhalter-Set nach einem der Ansprüche 8 bis 10, ***gekennzeichnet durch*** ein Polymerdichtmittel (18, 34) aus einem Elastomermaterial, insbesondere aus einem Silikonelastomer.

12. Abstandhalter-Set nach einem der Ansprüche 8 bis 11, ***dadurch gekennzeichnet, dass*** das Polymerdichtmittel (18, 34) mit dem Stützbereich (17, 32) formschlüssig verbunden ist.

13. Abstandhalter-Set nach einem der Ansprüche 8 bis 12, **gekennzeichnet durch** eine Entlüftungsbohrung (23) mit einem Durchmesser von ungefähr 1,00 mm bis 3,00 mm, vorzugsweise etwa 2,00 mm, die eine Verbindung zwischen einer Bohrung in dem Stützbereich (17, 32) und einer äußeren Umgebung des Abstandhalters (11, 30) herstellt.

## Claims

1. A method of manufacturing a heating panel (2, 31) of a panel radiator (1) whereby at least two half shells (4), at least one of which is profiled, are connected in a fluid-tight manner to the heating panel (2, 31) in such a way that between the half shells (4) two collector channels (13, 15) running parallel to each other, and between the collector channels (13, 15) heating channels (12, 14, 16) for a heating medium are formed, whereby in the region of a heating medium connection opening passing through of one half shelf (4) a spacer (11, 30) is fixed in a collector channel (13, 15) so that opposite support surfaces (S) of a support area (8, 17, 32) of the spacer (11, 30) come into contact with opposite inner surfaces (I) of the two half shells (4) adjoining the heating medium connection opening and a free area (F) of the spacer (11, 30), which is at least partially surrounded by the support area (8, 17, 32) corresponds with the heating medium connection opening, ***characterised in* that** at least one spacer (11, 30) is fixed in a collector channel (13, 15) with the use of a sealing means (18, 34) in such a way that the spacer (11, 30) and the sealing means (18, 34) jointly seal the collector channel (13, 15) in a fluid-tight manner, as a result of which flowing of the heating medium in the longitudinal direction of the collector channel (13, 15) is prevented there.

2. The method in accordance with claim 1 ***characterised in that*** the sealing means (18, 34) is a polymer sealing means.

3. The method in accordance with claim 2 ***characterised in* that** before joining of the half shells (4) to each other, the spacer (11, 30), provided with a polymer sealing means (18, 34) is at least in sections of greater dimensions in relation to the cross-section of the collector channel (13, 15), and that sealing takes place by joining the half-shells (4), whereby the elastic or plastic polymer sealing means (18, 34) is compressed and/or a viscous, possibly hardenable polymer sealing means is displaced.

4. The method in accordance with claim 1, ***characterised* in that** the sealing means is melted on at least on the outside and thereby moulds into gap areas between the spacer and the interior of the half shells and preferably combines with the support area of the spacer and/or with at least one of the internal surfaces of the half shells.

5. The method in accordance with claim 4, ***characterised* in that** a metal solder is used as the sealing means and is applied on the outer surface of at least on partial areas of the support surfaces and when connecting the half shells and/or connecting a heating medium pipe to one of the heating panels is melted on, whereby the heating medium pipe is connected to a half shell in such a way that the heating medium connection opening corresponds with an inner cross-section of the heating medium pipe.

6. A panel radiator (1) with at least one heating panel (2, 31) combined from two half shells (4) of which at least one is profiled, whereby between the half shells (4) two collector channels (13, 15) running parallel to each other, and heating channels (12, 14, 16) for a heating medium are formed, and with at least one heating medium connection opening of the heating panel (2, 31) formed on one of the collector channels (13, 15), as well as with a spacer (11, 30) which the region of a heating medium connection opening passing through of one half shelf is fixed in a collector channel so that opposite support surfaces (S) of a support area (8, 17, 32) of the spacer (11, 30) come into contact with opposite inner surfaces (I) of the two half shells (4) adjoining the heating medium connection opening and a free area (F) of the spacer (11, 30), which is at least partially surrounded by the support area (8, 17, 32) corresponds with the heating medium connection opening, ***characterised in that*** at least one spacer (11, 30) is fixed in a collector channel (13, 15) with a sealing means (18, 34) in such a way that the spacer (11, 30) and the sealing means (18, 34) jointly seal the collector channel (13, 15) in a fluid-tight manner, as a result of which flowing of the heating medium in the longitudinal direction of the collector channel (13, 15) is prevented there.

7. The panel radiator in accordance with claim 6, ***characterised in that*** the sealing means (18, 34) is a polymer sealing means and in the fixed state is compressed between the half shells (4) compared to an initial state before combining the half shells (4), in order to form a seal when pressure is applied to the interior surfaces (I) of the half shells (4).

8. A spacer set comprising a spacer (11, 30) for a heating panel (2, 31), assembled from two half shells (4), at least one of which is profiled, of a panel radiator (1), whereby between the half shells (4) two collector channels (13, 15) running parallel to each other, and heating channels (12, 14, 16) between the collector channels for a heating medium are formed, and whereby in the region of a heating medium connection opening the spacer (11, 30) is fixed the collector channel in such a way that opposite support surfaces (S) of the spacer (11, 30) come into contact with opposite inner surfaces (I) of the two half shells (4) and a free area (F) of the spacer (11, 30), which is at least partially surrounded by the support area (17, 32) corresponds with the heating medium connection opening, ***characterised in that*** a preformed polymer sealing means (18, 34) which, after connecting the half shells (4), seals the collector channel (13, 15) together with the support area (17, 32) in a fluid-tight manner.

9. The spacer set in accordance with any one of the preceding claims ***characterised in that*** the polymer sealing means (18, 34) is essentially ring-shaped and surrounds an outer circumference of the support area (17, 32).

10. The spacer set in accordance with claim 8 ***characterised in that*** the polymer sealing means (18, 34) has a plurality of sealing elements (26, 33) and each of the sealing elements (26, 33) seals one of several separate sections (28, 41) of the cross-section of the collector channel (29, 42).

11. The spacer set in accordance with any one of claims 8 to 10 ***characterised by*** a polymer sealing means (18, 34) consisting of an elastomer material, more particularly a silicone elastomer.

12. The spacer set in accordance with any one of claims 8 to 11 ***characterised in that*** the polymer sealing means (18, 34) is bonded form-closed with the support area (17, 32).

13. The spacer set in accordance with any one of claims 8 to 12 ***characterised by*** a venting hole (23) with a diameter of approximately 1.00 mm to 3.00 mm, preferably 2.00 mm, which forms a connection between a hole in the support area (17, 32) and an outer environment of the spacer (11, 30).

## Revendications

1. Procédé de fabrication d'une plaque de chauffage (2, 31) d'un radiateur à plaques (1), dans lequel deux demi-enveloppes (4), desquelles au moins une est profilée, sont ainsi reliées de manière étanche aux fluides à la plaque de chauffage (2, 31), qu'entre les demi-enveloppes (4), deux canaux de collecte (13, 15) s'étendant parallèlement l'un à l'autre sont formés et qu'entre les canaux de collecte (13, 15), des canaux de chauffage (12, 14, 16) pour un combustible sont formés, sachant qu'au niveau d'une ouverture de raccordement de combustible traversant une demi-enveloppe (4), un écarteur (11, 30) est ainsi fixé dans un canal de collecte (13, 15) que des surfaces d'appui (S) se faisant face d'une partie d'appui (8, 17, 32) de l'écarteur (11, 30) viennent en contact avec des faces intérieures (I) des deux demi-enveloppes (4) se faisant face et étant limitrophes de l'ouverture de raccordement de combustible, et une partie libre (F) de l'écarteur (11, 30) qui est entourée au moins partiellement par la partie d'appui (8, 17, 32), correspond avec l'ouverture de raccordement de combustible, **caractérisé en ce qu'**au moins un écarteur (11, 30), en employant un moyen d'étanchéité (18, 34), est ainsi fixé dans un canal de collecte (13, 15) que l'écarteur (11, 30) et le combustible (18, 34) bloquent ensemble le canal de collecte (13, 15) de manière étanche aux fluides, ce par quoi un écoulement du combustible dans le sens longitudinal du canal de collecte (13, 15) y est empêché.

2. Procédé selon la revendication 1, **caractérisé en ce que** le combustible (18, 34) est un moyen d'étanchéité polymère.

3. Procédé selon la revendication 2, **caractérisé en ce qu'**un écarteur (11, 30) doté du moyen d'étanchéité polymère (18, 34) possède avant la liaison des deux demi-enveloppes (4) entre elles, une surdimension au moins par tronçons par rapport à une section transversale du canal de collecte (13, 15) et **en ce que** l'étanchéité s'effectue par la liaison des deux demi-enveloppes (4), sachant que le moyen d'étanchéité polymère (18, 34) élastique ou plastique est comprimé et/ou qu'un moyen d'étanchéité polymère visqueux, éventuellement durcissable, est partiellement refoulé.

4. Procédé selon la revendication 1, **caractérisé en ce que** le moyen d'étanchéité est fondu au moins sur le côté extérieur et s'adapte ainsi dans des zones de fente entre l'écarteur et les faces intérieures des demi-enveloppes et crée de préférence une liaison avec la partie d'appui de l'écarteur et/ou avec au moins une des faces intérieures des demi-enveloppes.

5. Procédé selon la revendication 4, **caractérisé en ce qu'**un brasage métallique est employé comme moyen d'étanchéité et est épuisé sur le côté extérieur au moins sur des zones partielles des surfaces d'appui et est fondu lors de la liaison des demi-enveloppes et/ou lors de la liaison d'un tuyau de combustible avec une des plaques de chauffage, sachant que le tuyau de combustible est ainsi lié à une demi-enveloppe que l'ouverture de raccordement de combustible correspond avec une section transversale intérieure du tuyau de combustible.

6. Radiateur à plaques (1), comprenant au moins une plaque de chauffage (2, 31) reliée par deux demi-enveloppes (4), desquelles au moins une est profilée, sachant qu'entre les deux demi-enveloppes (4) deux canaux de collecte (13, 15) parallèles et des canaux de chauffage (12, 14, 16) pour un combustible, sont formés, et comprenant au moins une ouverture de raccordement de combustible de la plaque de chauffage (2, 31) formée sur l'un des canaux de collecte (13, 15), ainsi qu'un écarteur (11, 30) ainsi fixé dans un canal de collecte au niveau d'une ouverture de raccordement de combustible traversant une demi-enveloppe (4), que des surfaces d'appui (S) se faisant face d'une partie d'appui (17, 32) de l'écarteur (11, 30) viennent en contact avec des faces intérieures opposées (I) des deux demi-enveloppes (4), et une partie libre (F) de l'écarteur (11, 30) qui est entourée au moins partiellement par la partie d'appui (17, 32), correspond avec l'ouverture de raccordement de combustible, **caractérisé en ce qu'**au moins un écarteur (11, 30), conjointement avec un moyen d'étanchéité (18, 34), est ainsi fixé dans un canal de collecte (13, 15) que l'écarteur (11, 30) et le moyen d'étanchéité (18, 34) bloquent ensemble le canal de collecte (13, 15) de manière étanche aux fluides, ce par quoi un écoulement du combustible dans le sens longitudinal du canal de collecte (13, 15) y est empêché.

7. Radiateur à plaques selon la revendication 6, **caractérisé en ce que** le moyen d'étanchéité (18, 34) est un moyen d'étanchéité polymère et est comprimé entre les demi-enveloppes (4) dans l'état fixé comparé à un état de départ présent avant la liaison des demi-enveloppes (4), pour y apporter une étanchéité au moyen d'une compression sur les surfaces intérieures (I) des demi-enveloppes (4).

8. Kit d'écarteur, présentant un écarteur (11, 30) pour une plaque de chauffage (2, 31) d'un radiateur à plaques (1), composée de deux demi-enveloppes (4), desquelles au moins une est profilée, sachant qu'entre les demi-enveloppes (4), deux canaux de collecte (13, 15) s'étendant parallèlement l'un à l'autre et qu'entre les canaux de collecte (13, 15), des canaux de chauffage (12, 14, 16) pour un combustible, sont formés, et sachant que l'écarteur (11, 30), au niveau d'une ouverture de raccordement de combustible, est ainsi fixé dans le canal de collecte (13, 15) que des surfaces d'appui opposées (S) de l'écarteur (11, 30) sont en contact avec des faces intérieures opposées (I) des deux demi-enveloppes (4), et une partie libre (F) de l'écarteur (11, 30) qui est entourée au moins partiellement par une partie d'appui (17, 32), correspond avec l'ouverture de raccordement de combustible, **caractérisé par** un moyen d'étanchéité polymère (18, 34) préformé qui ferme le canal de collecte (13, 15) de manière étanche aux fluides conjointement avec la partie d'appui (17, 32) après la liaison des demi-enveloppes (4).

9. Kit d'écarteur selon la revendication précédente, **caractérisé en ce que** le moyen d'étanchéité polymère (18, 34) est essentiellement annulaire et entoure la partie d'appui (17, 32) sur un pourtour extérieur.

10. Kit d'écarteur selon la revendication 8, **caractérisé en ce que** le moyen d'étanchéité polymère (18, 34) présente une pluralité d'éléments d'étanchéité (26, 33) et chacun des éléments d'étanchéité (26, 33) ferme respectivement l'une de plusieurs sections (28,41) séparées de la section transversale du canal de collecte (29, 42).

11. Kit d'écarteur selon l'une des revendications 8 à 10, **caractérisé par** un moyen d'étanchéité polymère (18, 34) en matériau élastomère, en particulier en élastomère silicone.

12. Kit d'écarteur selon l'une des revendications 8 à 11, **caractérisé en ce que** le moyen d'étanchéité polymère (18, 34) est relié à la partie d'appui (17, 32) par complémentarité des formes.

13. Kit d'écarteur selon l'une des revendications 8 à 12, **caractérisé par** un perçage de ventilation (23) avec un diamètre d'environ 1,00 mm à 3,00 mm, de préférence environ 2,00 mm, qui crée une liaison entre un perçage dans la partie d'appui (17, 32) et un environnement extérieur de l'écarteur (11, 30).
